# EUROPÄISCHE PATENTSCHRIFT

(11) **EP 0 934 225 B1**
(45) Veröffentlichungstag und Bekanntmachung des Hinweises auf die Patenterteilung: **03.07.2002**
(21) Anmeldenummer: 97912111.8
(22) Anmeldetag: 04.10.1997
(51) Int. Cl.: B65H 45/20, B65H 45/12

(54) **EINRICHTUNG ZUM FALZEN EINER MATERIALBAHN**
DEVICE FOR FOLDING A WEB OF MATERIAL
DISPOSITIF DE PLIAGE D'UNE BANDE DE MATERIAU

(30) Priorität: 18.10.1996 DE 19643071
(43) Veröffentlichungstag der Anmeldung: 11.08.1999
(73) Patentinhaber: FILTERWERK MANN & HUMMEL GmbH, 71631 Ludwigsburg (DE); FRAUNHOFER-GESELLSCHAFT ZUR FÖRDERUNG DER ANGEWANDTEN FORSCHUNG E.V., 80636 München (DE)
(72) Erfinder: DEMMEL, Jörg, D-70563 Stuttgart (DE); LEVERMANN, Andreas, D-70839 Gerlingen (DE); RAPP, Siegfried, D-71711 Murr (DE)
(74) Vertreter: Voth, Gerhard, Dipl.-Ing.
(86) Internationale Anmeldenummer: EP9705453
(87) Internationale Veröffentlichungsnummer: WO9817573

(56) Entgegenhaltungen:
- DE-A- 2 927 458
- DE-A- 4 201 288
- NL-C- 52 575
- US-A- 3 514 364
- PATENT ABSTRACTS OF JAPAN vol. 008, no. 187 (C-240), 28.August 1984 & JP 59 082919 A (TOYO BOSEKI KK;OTHERS: 01), 14.Mai 1984,

## Beschreibung

Die Erfindung betrifft eine Einrichtung zum Falzen einer Materialbahn.

Aus dem US-Patent 4 778 441 ist eine Einrichtung zum Falzen einer Materialbahn bekannt. Diese besteht im wesentlichen aus einer Prägewalze, die konkave und konvexe Prägeelemente aufweist sowie einer entsprechenden Gegenwalze. Zwischen den beiden Walzen wird das zu prägende Papier geführt.

Es ist ferner aus der DE-OS 42 01 288 ein Verfahren und eine Maschine zum Herstellen einer Plissierung auf Papier, Filtermaterial oder ähnlichen Medien bekannt. Auch dieses Verfahren arbeitet mit einem Kerbwalzenpaar mit Kerbmessern und Gegenhaltem. Durch eine entsprechende Steuerung lassen sich variable Plissierungen herstellen.

Eine Einrichtung, die zickzackförmig gefaltete Filterelemente fertigt, ist aus dem US-Patent 35 14 364 bekannt. Hier sind zwei Sternwalzen vorgesehen, die das Papier prägen und gleichzeitig falzen. Den Stemwalzen sind Transportbänder nachgeschaltet zur Führung des zickzackförmig gefalteten Elementes in eine Formvorrichtung.

Aus der NL 52 575 ist ein Werkzeug bekannt, mit welchem unter Wärmeeinwirkung von Wärme thermoplastisches Material gefaltet werden kann.

Ein Nachteil bei den bekannten Präge- oder Falteinrichtungen besteht darin, daß bei bestimmten zu verarbeitenden Materialien die Prägewirkung nicht ausreicht, um eine exakte Faltkante zu erzielen. Es ist insbesondere von Nachteil, daß das mechanische Prägen über Walzen oberhalb einer bestimmten Maximalgeschwindigkeit zu verschlechterten Ergebnissen hinsichtlich der Prägewirkung führt.

Aus der JP 59082919 ist eine Einrichtung zur Erzeugung einer Prägewirkung bei einem zu verarbeitenden Material bekannt. Hierzu wird ein Hochfrequenzschweisverfahren oder ein Ultrasonicschweißverfahren angewendet. Wie die weitere Verarbeitung ist nicht bekannt. Der Stand der Technik enthällt ebenfalls keine Informationen über eine Einrichtung zum Falzen der geprägten Materialbahn.

Der Erfindung liegt daher die Aufgabe zugrunde, die genannten Nachteile zu vermeiden und eine Einrichtung zum Falzen einer Materialbahn zu schaffen, die eine hohe Prägeleistung erzielt und auch bei unterschiedlichen Materialien eine für das Falzen ausreichende Prägung schafft.

Diese Aufgabe wird durch die Merkmale des Anspruchs 1 gelöst.

Es ist zwar bekannt, mit Ultraschall ein Verschweißen von Verbundmaterialien oder Vliesstoffen durchzuführen. Es ist auch bekannt, im Ultraschallverfahren Vliesstoffe oder Papier zu schneiden. Bei dem erfindungsgemäßen Verfahren wird jedoch weder ein Schneidvorgang noch ein Verschweißvorgang durchgeführt.

Der wesentliche Vorteil der Erfindung liegt darin, daß die Unterstützung der Prägung mit Ultraschall die Prägewirkung verbessert und kürzere Taktzeiten erzielt werden. Durch die Energieeinleitung mittels Ultraschall erfolgt, insbesondere bei der Verwendung von Kunststoffaservlies, ein Plastifizieren im Bereich der Knicklinie aufgrund der erzeugten Wärme.

Ein Vorteil bei der Anwendung von Ultraschall ist außerdem darin zu sehen, daß die Einleitung gezielt an der gewünschten Position vorgenommen werden kann. Damit ist der Energieverbrauch gering und die eingeleitete Energie läßt sich sehr gut dosieren.

Gemäß der Erfindung besteht die Prägeeinheit aus wenigstens einer Amboßwalze mit einer entsprechend def. Kontur und einer Sonotrode. Diese Sonotrode ist ein Teil eines Schwinggebildes, mit welchem die erforderliche Energie auf die zu verarbeitende Materialbahn eingeleitet wird bzw. einwirken kann.

Eine Ausgestaltung der Einrichtung sieht vor, zwei Prägeeinheiten zu verwenden. Damit läßt sich die Materialbahn beidseitig prägen und es kann ein zickzackförmig gefaltetes Element gebildet werden. Nachdem die Materialbahn mit den Prägungen versehen ist, gelangt sie zu einer Entnahmeeinheit oder Aufstelleinheit. Hier erfolgt die zickzackförmige Aufrichtung dadurch, daß zum Beispiel die Materialbahn in drehende Spindeln eingeführt wird. Diese Spindeln erlauben eine exakte Festlegung des Faltenabstandes.

Eine vorteilhafte Ausgestaltung der Erfindung sieht vor, die Amboßwalzen oder die Sonotroden modular aufzubauen, so daß diese rasch ausgetauscht werden können und eine Anpassung an die geforderte Prägestruktur sehr einfach möglich ist.

Eine weitere Ausgestaltung der Erfindung sieht vor, auch ein aus Aktivkohle bestehendes oder mit Aktivkohle dotiertes Kunststoffelement zu prägen und damit ein Filterelement zu schaffen, welches neben Partikeln auch Luftschadstoffe und Gase absorbiert.

Diese und weitere Merkmale von bevorzugten Weiterbildungen der Erfindung gehen außer aus den Ansprüchen auch aus der Beschreibung und den Zeichnungen hervor.

Die Erfindung wird anhand von Ausführungsbeispielen näher erläutert. Es zeigen:
- Figur 1: ein Anlageschema einer Einrichtung zum Falzen einer Materialbahn
- Figur 2: ein Anlageschema eines weiteren Ausführungsbeispieles einer Einrichtung zum Falzen einer Materialbahn
- Figur 3: eine Detaildarstellung einer Sonotrode

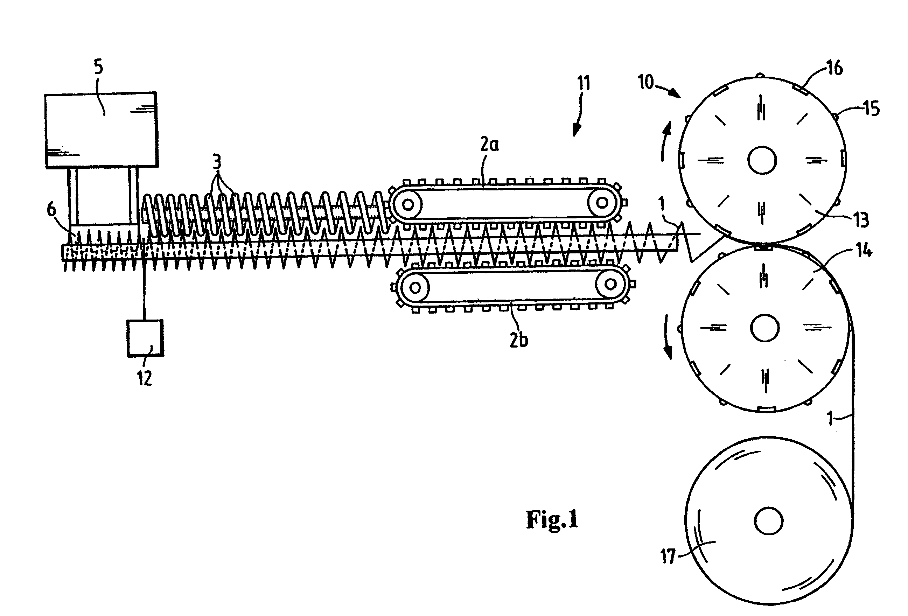

Im Anlageschema gemäß Figur 1 ist eine endlose Filtermaterialbahn 1 dargestellt. Diese wird zunächst in einer Prägestation 10 geprägt. Die Prägestation 10 besteht aus zwei Amboßwalzen 13, 14, die mit Prägestempeln 15 und Gegenstücken 16 ausgestattet sind. Die von einer Rolle 17 ablaufende Filtermaterialbahn 1 wird damit wechselseitig mit einer Kerblinie versehen. Von der Prägestation 10 aus gelangt die Filtermaterialbahn in den Einflußbereich einer Faltstation 11, genauer gesagt zwischen zwei Zahnriemen 2 a, 2 b, die die geprägte Filtermaterialbahn 1 definiert falten. Nach den Zahnriemen läuft die gefaltete Filtermaterialbahn 1 weiterhin definiert in eine Schnecke 3. Diese Schnecke 3 weist eine veränderliche Steigung auf und kann das zickzackförmig gefaltete Material zu einem bestimmten Faltenabstand zusammenführen. Am Ende werden mit einer Trennvorrichtung 12 die Filterelemente vereinzelt und mit einem kammartigen Element 6 einer Übernahmestation 5 zugeführt. Die auf den Prägewalzen 13, 14 angeordneten Prägestempel 15 sind jeweils mit einer Sonotrode versehen bzw. sind als Sonotrode ausgestaltet und werden von einem Ultraschallgenerator angeregt. Die Sonotrode bzw. der Prägestempel erzeugt damit - über einen Reibungseffekt und eine örtliche Erwärmung - ein Plastifizieren der aus einem Vlies bestehenden Materialbahn und damit eine Kontur, die ein Rillenprofil darstellt.

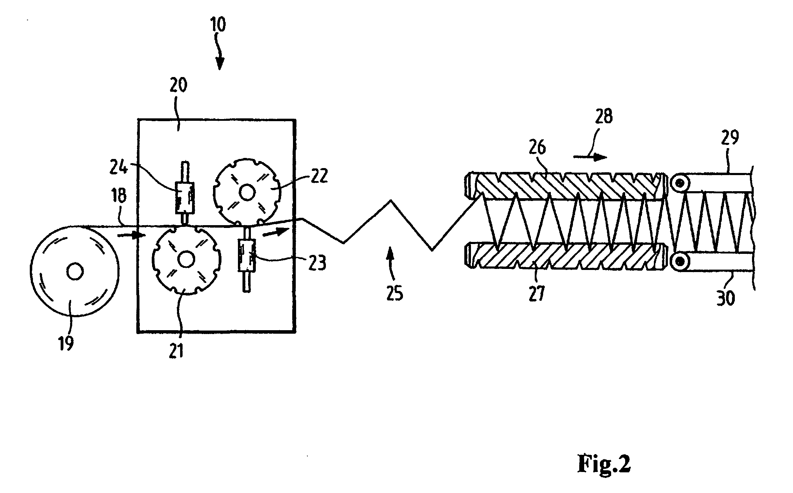

Figur 2 zeigt in einer schematischen Darstellung eine Anlage, die eine Variante der in Figur 1 gezeigten Anlage darstellt. Eine Filtermaterialbahn 18 wird von einer Rolle 19 zu einem Prägemodul 20 geführt. Dieses Prägemodul besteht aus der Amboßwalze 21 und der Amboßwalze 22, sowie den Sonotroden 23 und 24 als Teil eines sogenannten Schwinggebildes. Die Sonotroden prägen beim Durchlaufen der Filtermaterialbahn diese an den dafür vorgesehenen Stellen, so daß nachfolgend ein Abknicken im Bereich 25 erfolgt. Zum Definieren des Faltenabstandes sind zwei Spindeln 26, 27 vorgesehen, in welche die Filtermaterialbahn einläuft. Diese Spindeln weisen eine sich verringernde Steigung auf, so daß der Faltenabstand sich in Laufrichtung gemäß dem Pfeil 28 der Filtermaterialbahn verringert. Nachdem der endgültige Faltenabstand am rechtsseitigen Ende der Spindeln eingestellt ist, wird die Filtermaterialbahn zwei Förderbändern 29, 30 übergeben. Diese Förderbänder führen die Filtermaterialbahn zu einer hier nicht gezeigten Konfektionier- bzw. Schneidevorrichtung.

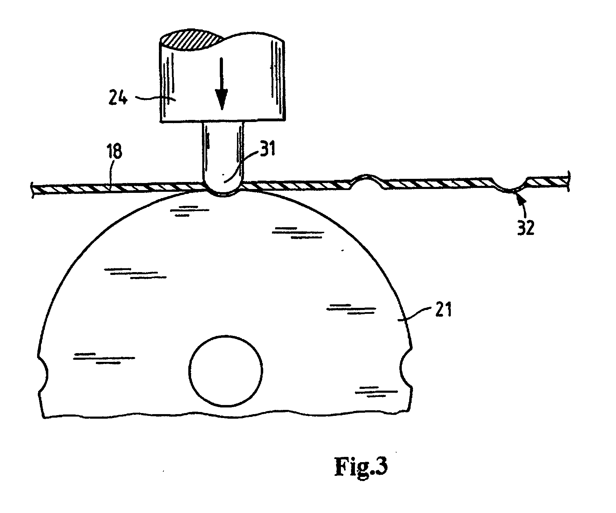

Figur 3 zeigt in einer vergrößerten Darstellung das Prinzip des ultraschallunterstützten Prägens. Hier ist eine Sonotrode 24 sowie die Amboßwalze bzw. der Amboß 21 dargestellt, durch welche sich die Filtermaterialbahn 18 hindurchbewegt. Während des Transports der filtermaterialbahn führt die Einleitung von Ultraschall an der Spitze 31 der Sonotrode 24 zum kurzzeitigen Erwärmen der Filtermaterialbahn in einem definierten Bereich und damit zu einer bleibenden Verformung. Diese bleibende Verformung bildet die Knickstellen 32. Das Spaltmaß zwischen der Sonotrode und der Prägewalze 21 läßt sich variabel einstellen und damit optimal auf die verwendete Filtermaterialbahn anpassen. Es besteht auch die Möglichkeit, aktivkohlebeschichtetes Material oder aktivkohledotiertes Material zu prägen. Auch hier ist die Variabilität hinsichtlich der Prägetiefe von Vorteil, insbesondere dann, wenn Materialien verwendet werden, in welche Aktivkohle in einer Art Multi-Layer-Schicht eingebettet ist und eine Beschädigung dieser Schichten vermieden werden muß.

Die Prozeßschritte bei der Herstellung eines zickzackförmig gefalteten Filterelementes sind:
- das Schwächen des Materials mit Unterstützung von Ultraschall und damit auch gleichzeitig das Erwärmen des Materials,
- anschließend das Aufstellen der Filtermaterialbahn in Spindeln oder Förderbändern
- und nachfolgend das Fixieren des Filterelementes durch geeignete bekannte Maßnahmen wie Kleberaupen, Seitenbändern o.ä.

Wird ein aktivkohledotiertes Material verwendet, dann besteht durch das Ultraschallverfahren die Möglichkeit, die Aktivkohlepartikel im Bereich der Knickstelle zu zerkleinern. Dies hat den Vorteil, daß einerseits Beschädigungen des Materials vermieden werden, andererseits sich die Knickstelle auch bei Verwendung von Aktivkohlepartikeln sehr genau definieren läßt.

Es ist vorteilhaft, die Ultraschallwirkung, und damit die Erwärmung des Materials an der Knickstelle so einzustellen, das bei Polyestervlies eine örtliche Erwärmung von ca. 110 bis 120° C auftritt. Diese Erwärmung oberhalb der Glastemperatur führt zu einer dauerhaften Verformung, wobei die Knickstelle trotzdem plastisch bleibt.

## Patentansprüche

1. Einrichtung zum Falzen einer Materialbahn (1), wobei eine Zuführeinrichtung für die Materialbahn (1) vorgesehen ist, eine Entnahmeeinheit sowie wenigstens eine Prägeeinheit (10) zum Definieren der Knicklinie der Materialbahn (1),
• wobei die erste Prägeeinheit (21,24) aus wenigstens einer Amboßwalze (21) mit Prägekontur und einem Prägestempel (24) oder einem Prägemesser besteht,
• wobei der Prägestempel (24) oder das Prägemesser als Sonotrode ausgebildet ist
• wobei eine weitere Prägeeinheit (22,23) vorgesehen ist, wobei die erste Prägeeinheit (21, 24) die Materialbahn von der einen Seite und die zweite Prägeeinheit (22, 23) die Materialbahn von der gegenüberliegenden Seite prägt und beide Prägeeinheiten zur Unterstützung der Prägewirkung mit Ultraschall beaufschlagt sind und
• wobei der Prägeeinheit nachgeordnet, eine Aufstelleinheit (26, 27) vorgesehen ist, welche aus der Materialbahn (18) ein zickzackförmig gefaltetes Element bildet und
• wobei die Aufstelleinheit (26,27) zum Definieren des Faltenabstandes zwei Spindeln aufweist die eine sich verringernde Steigung besitzen derart, dass sich der Faltenabstand in Laufrichtung der Materialbahn (1) verringert.

2. Einrichtung nach Anspruch 1, **dadurch gekennzeichnet, dass** die Amboßwalze und/oder die Sonotrode modular austauschbar sind.

3. Einrichtung nach Anspruch 1, **dadurch gekennzeichnet, dass** das zu prägende Material (18) ein Papier, Kunststoffvlies oder mit Aktivkohle dotiertes Kunststoffelement ist.

## Claims

1. Means for folding a web of material (1), wherein a means for supplying the web of material (1) is provided, and an extracting unit as well as at least one embossing unit (10) are provided to define the folding line of the web of material (1),
• wherein the first embossing unit (21, 24) comprises at least one anvil roller (21), provided with an embossing outline, and an embossing punch (24) or an embossing blade,
• wherein the embossing punch (24) or the embossing blade is in the form of a sonotrode,
• wherein an additional embossing unit (22, 23) is provided, the first embossing unit (21, 24) embossing the web of material from one side, and the second embossing unit (22, 23) embossing the web of material from the oppositely situated side, and both embossing units having ultrasound acting thereon to aid the embossing action, and
• wherein an assembling unit (26, 27) is provided downstream of the embossing unit and forms a zigzag-folded element from the web of material (18), and
• wherein, to define the spacing between the folds, the assembling unit (26, 27) includes two spindles which have a reducing pitch so that the fold spacing reduces when viewed with respect to the direction of travel of the web of material (1).

2. Means according to claim 1, **characterised in that** the anvil roller and/or the sonotrode are/is interchangeable in a modular manner.

3. Means according to claim 1, **characterised in that** the material (18) to be embossed is a paper, a non-woven plastics material matting or a plastics material element which is doped with active carbon.

## Revendications

1. Dispositif de pliage d'une bande de matériau (1), comprenant un dispositif d'amenée de la bande (1), une unité d'extraction ainsi qu'au moins une unité de matriçage (20) pour définir la ligne de pliage de la bande de matériau (1),
**caractérisé en ce que**
- la première unité de matriçage (21, 24) est composée d'au moins d'un cylindre matrice (21) présentant le contour de l'empreinte et d'un poinçon de matriçage (24) ou d'un couteau de matriçage,
- le poinçon de matriçage (24) ou le couteau de matriçage est constitué par une sonotrode
- il est prévu une seconde unité de matriçage (22, 23), la première unité (21, 24) agissant sur la bande de matériau d'un côté tandis que la seconde unité (22, 23) agit sur la bande du côté opposé, les deux unités étant soumises à des ultrasons pour assister l'effet de l'estampage,
- en aval de l'unité de matriçage, il est prévu une unité de dressage (26, 27) qui transforme la bande de matériau (18) en un élément plié en accordéon, et
- l'unité de dressage (26, 27) comporte, pour définir l'intervalle entre les plis, deux broches filetées, la pente du filetage de chaque broche allant en diminuant dans la direction d'avancement de la bande de matériau (1).

2. Dispositif selon la revendication 1,
**caractérisée en ce que**
le cylindre matrice et/ou la sonotrode sont échangeables modulairement.

3. Dispositif selon la revendication 1,
**caractérisée en ce que**
le matériau à estamper (18) est du papier, du non tissé synthétique ou un élément synthétique doté de charbon actif.
